# EUROPÄISCHE PATENTSCHRIFT

(11) **EP 2 674 749 B1**
(45) Veröffentlichungstag und Bekanntmachung des Hinweises auf die Patenterteilung: **07.06.2023**
(21) Anmeldenummer: 13002996.0
(22) Anmeldetag: 12.06.2013
(51) Int. Cl.: G01N 25/20, G01J 3/02

(54) **THERMOANALYSEVORRICHTUNG**
THERMAL ANALYSIS DEVICE
DISPOSITIF DE THERMO-ANALYSE

(30) Priorität: 13.06.2012 DE 102012105101
(43) Veröffentlichungstag der Anmeldung: 18.12.2013
(73) Patentinhaber: Netzsch Gerätebau GmbH, 95100 Selb (DE)
(72) Erfinder: Neumann, Georg, 95173 Schönwald (DE); Blumm, Jürgen, 95100 Selb (DE); Schindler, Alexander, 95191 Leupoldsgrün (DE)
(74) Vertreter: Benninger, Johannes

(56) Entgegenhaltungen:
- WO-A2-2007/067601
- DE-A1- 4 138 689
- DE-U1-202004 013 064

## Beschreibung

Es ist eine Vorrichtung zur thermischen Analyse offenbart. Diese Vorrichtung besteht aus mindestens einem thermoanalytischen Messgerät und mindestens einem Infrarot-Spektrometer.

Vorrichtungen und Verfahren zur "Thermoanalyse" sind aus dem Stand der Technik bekannt und mittlerweile weltweit insbesondere zu Zwecken einer Materialcharakterisierung etabliert. Damit können beispielsweise Polymere, pharmazeutische Werkstoffe, Textilien, Metalle, Keramiken und andere organische oder anorganische Materialien analysiert und charakterisiert werden.

Bei der "Thermoanalyse" (oder "Thermischen Analyse") wird eine zu untersuchende Probe mittels einer Temperiereinrichtung (z. B. elektrische Heizeinrichtung) einer kontrollierten Temperaturveränderung, z. B. einem voreinstellbaren "Temperaturprogramm" unterworfen. Die Probe kann hierbei aufgeheizt, abgekühlt oder auf einer konstanten Temperatur gehalten werden.

Eine möglichst genaue Einhaltung des Temperaturprogrammes setzt in der Regel vorraus, dass die Probentemperatur kontinuierlich erfasst, beispielsweise mit einem Temperaturmesssensor gemessen wird, so dass ein für die Probentemperatur repräsentatives Erfassungs- bzw. Messsignal für eine Regelung (z. B. PID-Regelung) der Probentemperatur nutzbar ist.

Außerdem wird während der kontrollierten Veränderung der Probentemperatur kontinuierlich wenigstens ein für eine (weitere) Eigenschaft der Probe charakteristisches (weiteres) Signal erfasst und zusammen mit dem Verlauf der Probentemperatur aufgezeichnet.

Die Thermoanalyse ermöglicht somit die Untersuchung bzw. Charakterisierung von temperaturbedingten Änderungen von Eigenschaften eines Probenmaterials, einschließlich thermisch in der Probe ausgelösten Vorgängen.

Es versteht sich, dass der hier verwendete Begriff "kontinuierlich" im Zusammenhang mit einer Erfassung (z. B. Messung) von Signalen auch eine quasi-kontinuierliche, beispielsweise in relativ kleinen Zeitabständen (z. B. periodisch) erfolgende Erfassung einschließt.

Je nachdem, welches weitere Signal bzw. welche weiteren Signale (neben der Probentemperatur) während der kontrollierten Veränderung der Probentemperatur erfasst werden, lassen sich Thermoanalyseverfahren noch näher spezifizieren. Derartige speziellere Methoden der Thermoanalyse sind ebenfalls aus dem Stand der Technik bekannt und bedürfen daher hier keiner näheren Erläuterung. Lediglich beispielhaft seien folgende Methoden genannt: Differentialthermoanalyse (DTA), Differenzkalorimetrie (DSC) bzw. Dynamische Differenzkalorimetrie (DDK), Thermogravimetrie (TG) bzw. Thermogravimetrische Analyse (TGA) und Thermomechanische Analyse (TMA).

Für die Charakterisierung von thermischen Abdampf- und Zersetzungseffekten werden häufig die TG oder eine " Simultane Thermische Analyse " (STA), d. h. eine Kombination aus TG und DSC bzw. DDK verwendet. In einer Weiterbildung kann hierbei neben der Erfassung eines Masseverlustes der Probe z. B. auch gleichzeitig eine Untersuchung von Gasen erfolgen, die von der Probe freigesetzt werden. Zur Gasuntersuchung kann z.B. Fourier-Transformations-Infrarotspektroskopie (FTIR) oder Massenspektrometrie (MS, beispielsweise unter Verwendung eines Quadrupol-Massenspektrometers) eingesetzt werden.

Die vorab beschriebenen Messgeräte zeichnen sich im Allgemeinen durch eine nicht unerhebliche Baugröße aus. Die Kombination von zwei und mehr Messgeräten und/oder Messverfahren ist somit mit einem nicht unerheblichen Platz- und Technikaufwand verbunden. Der Erfindung liegt somit die Aufgabe zugrunde, eine kompakte Messvorrichtung zu schaffen, bei der ein Infrarot-Spektrometer effizient und ökonomisch mit einem thermoanalytischen Messgerät verbunden ist.

Die WO 2007/067601 A1 beschreibt eine Vorrichtung zur Inspektion der Kühlungsöffnungen eines Turbinenblattes. Die Vorrichtung umfasst eine Kabine zur Aufnahme eines Turbinenblattes, einen Heizer, eine IR-Kamera und eine Steuereinheit zur Identifizierung von Eigenschaften einer Kühlungsöffnung auf der Basis von Temperatursignalen der IR-Kamera. Die Steuereinheit ist seitlich auf der Kabine montiert, und die IR-Kamera ist über einen Roboterarm mit dem Kabinendach verbunden.

Die DE 41 38 689 A1 beschreibt ein Gerät zur thermogravimetrischen Bestimmung, umfassend einen Halter zum Halten eines Probenbehälters, eine Thermowaage mit einem Heizofen zur Steuerung des Geräts mittels eines Temperaturreglers und einer Schale mit darauf im Vorhinein angeordneten Probenbehältern. Weiter ist eine automatische Probenahmeeinheit vorhanden, die in der Lage ist, den Probenbehälter von der Schale zum Halter und wieder zurück befördern, wobei dieser Probenbehälter von der Schale aus aufgenommen und auf dem Halter abgestellt wird. Damit kann die thermogravimetrische Bestimmung alternierend und schrittweise vorgenommen werden.

Die erfindungsgemäße Aufgabe wird durch eine Vorrichtung gelöst, die die Merkmale des Anspruchs 1 umfasst. Weitere vorteilhafte Ausgestaltungen sind den Merkmalen der Unteransprüche zu entnehmen.

Es ist eine Vorrichtung zur thermischen Analyse offenbart. Diese Vorrichtung besteht aus mindestens einem thermoanalytischen Messgerät und mindestens einem Infrarot-Spektrometer, wobei das Infrarot-Spektrometer mit dem thermoanalytische Messgerät ein Messsystem bildet. Das thermoanalytische Messgerät und das Infrarot-Spektrometer sind über mindestens eine Hub-Schwenkeinheit miteinander verbunden, wobei das Infrarot-Spektrometer oberhalb des thermoanalytischen Messgerätes angeordnet ist.

Die Vorrichtung zur thermischen Analyse verfügt über einen Ofen zur Beheizung einer Probe, die in das thermoanalytische Messgerät eingebracht wird. Das Infrarot-Spektrometer ist über eine Kupplung mit dem Ofen verbunden. Die Kupplung befindet sich zwischen dem Ofen und dem Infrarot-Spektrometer, sodass sie den Ofen und das Infrarot-Spektrometer fest miteinander verbindet. In einer bevorzugten Ausführungsform ist die Kupplung mit dem Ofen und mit dem Infrarot-Spektrometer durch eine Verschraubung verbunden. Durch diese Verschraubung ist es möglich, den Ofen von dem Infrarot-Spektrometer zu trennen, um zum Beispiel das thermoanalytische Messgerät separat zu verwenden. Dieses Vorgehen kann bei Proben sinnvoll sein, deren gasförmige Pyrolyseprodukte einen hohen Verschmutzungsgrad aufweisen oder das Infrarot-Spektrometer beschädigen könnten.

Um die Messergebnisse der Vorrichtung zur thermischen Analyse zu verbessern und um Kondensation in der Kupplung zu vermeiden ist diese beheizbar. Hier liegt auch einer der Vorteile der erfindungsgemäßen Vorrichtung zur thermischen Analyse gegenüber den, aus dem Stand der Technik, bekannten Vorrichtungen. Bei den bekannten Vorrichtungen werden bis zu zwei Meter lange Transferleitungen verwendet. Diese Transferleitungen sind aufwendig zu beheizen und bergen Räume in denen Gase kondensieren und/oder Ablagerungen entstehen können. Durch Kondensation und/oder Ablagerungen wird das spätere Messergebnis des Infrarot-Spektrometers möglicherweise verfälscht. Auch ein Wechsel der üblichen Transferleitungen, zum Beispiel zum Messen einer sensiblen Probe, ist wesentlich aufwendiger als der Austausch der Kupplung bei der erfindungsgemäßen Vorrichtung. Ein kompletter Verzicht auf die Kupplung ist jedoch nicht möglich. Die Kupplung dient auch als Abstandshalter zwischen dem Ofen und dem Infrarot-Spektrometer. Würde das Infrarot-Spektrometer direkt über oder direkt auf dem Ofen angeordnet, kann es durch die heiße Abluft des Ofens zu einer Aufheizung des Infrarot-Spektrometers kommen. Diese Aufheizung würde die Messgenauigkeit des Infrarot-Spektrometers stark beeinflussen. Weiterhin kann eine zu starke Aufheizung des Infrarot-Spektrometers zu einer Zerstörung des Gerätes führen.

Das Infrarot-Spektrometer und der Ofen sind mittels der Hub-Schwenkeinheit anheb- und schwenkbar. Das Anheben und Schwenken ist notwendig um neue Proben auf den Probenhalter, welcher aus dem thermoanalytischen Messgerät herausragt, aufbringen zu können. In einer bevorzugten Ausführungsform ist die Vorrichtung mit einem Probenwechsler versehen. Der Probenwechsler ist durch die Hub-Schwenkeinheit an den Platz des Infrarot-Spektrometers verfahrbar.

Die Hub-Schwenkeinheit ist mit mindestens einer Hubvorrichtung versehen. Die Hubvorrichtung ist eine hydraulische, eine mechanische oder eine elektro-mechanische Vorrichtung. Die Hub-Schwenkeinheit ist voll- oder teilautomatisiert verwendbar. Für den Fachmann ist klar, dass aus dem Stand der Technik viele Möglichkeiten bekannt sind um Messgeräte verschiedener Baugrößen anzuheben und/oder zu verschieben. Daher stellt die vorab gemachte Aufzählung keine abschließende Beschränkung der Erfindung dar.

Es ist weiterhin möglich, die Vorrichtung zur thermischen Analyse, zusätzlich zu dem Infrarot-Spektrometer mit einem weiteren Messgeräte zu versehen, wobei beide Messgeräte über die Hub-Schwenkeinheit mit dem thermoanalytischen Messgerät verbunden sind.

Das thermoanalytische Messgerät ist ein Messgerät zur Differentialthermoanalyse oder zur Differenzkalorimetrie, beziehungsweise zur Dynamischen Differenzkalorimetrie oder zur Thermogravimetrie beziehungsweise zur Thermogravimetrischen Analyse oder zur Simultanen Thermischen Analyse oder zur Thermomechanischen Analyse. Das Infrarot-Spektrometer ist ein Messgerät zur Fourier-Transformations-Infrarotspektroskopie und/oder zur Nah-Infrarotspektroskopie.

Auch hier ist für den Fachmann klar, dass mehrere Messgeräte miteinander, durch die mindestens eine Hub-Schwenkverbindung, verbunden und bewegt werden können. Es ist auch denkbar Messgeräte zum reinen Aufnehmen von Temperaturen oberhalb des Ofens anzuordnen. Je nachdem welche Produkte im Ofen erhitzt werden, ist es auch denkbar, den Ofen über die Kupplung mit einem Filter zu versehen, der schädliche Gase aus der Laboratmosphäre heraushält.

Die Verwendung der erfindungsgemäßen Vorrichtung könnte wie folgt verlaufen. Das über dem thermoanalytischen Messgerät angeordnete Infrarot-Spektrometer wird gemeinsam mit einer Kupplung und einem Ofen, mittels einer Hub-Schwenkeinheit angehoben. Dann wird es von seiner Position über dem Probenhalter, des thermoanalytischen Messgerätes, entfernt. Während des Entfernens des Infrarot-Spektrometers wird ein Probenwechsler an die ursprüngliche Position des Infrarot-Spektrometers gefahren. Eine Probe aus dem Probenwechsler wird auf einen Probenhalter aufgegeben. Sollte sich schon eine Probe, aus einer vorherigen Messung auf dem Probenhalter befinden, so wird diese entfernt, bevor die neue Probe aufgegeben wird. Anschließend werden das Infrarot-Spektrometer und der Ofen mittels der Hub-Schwenkeinheit wieder über das thermoanalytische Messgerät gefahren. Nach dem Verbinden des thermoanalytischen Messgerätes und des Infrarot-Spektrometers wird die Probe in dem Ofen aufgeheizt. Die Probe wird bis zu Temperaturen von 400° bis 1.800° Celsius aufgeheizt. Dieser große Temperaturbereiche sind notwendig, da mit der Vorrichtung sowohl Proben aus organischem Material als auch Proben mit sehr hoher Temperaturbeständigkeit untersucht werden. Proben mit sehr hoher Temperaturbeständigkeit können zum Beispiel keramische Materialien sein. Durch die Aufheizung kommt es entweder zu einer Ausgasung von Produktbestandteilen oder zu einer Pyrolyse, bei welcher ebenfalls Gase und/oder gasförmige Produkte frei werden. Die frei gewordenen Gase und/oder gasförmigen Produkte werden dem Infrarot-Spektrometer über die Kupplung zugeführt. In dem Infrarot-Spektrometer wird dann die chemische Zusammensetzung des Gases und/oder des gasförmigen Produktes bestimmt.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine erfindungsgemäße Vorrichtung zur thermischen Analyse.
Fig. 2 zeigt eine erfindungsgemäße Vorrichtung zur thermischen Analyse in geöffnetem Zustand.
Fig. 3 zeigt eine erfindungsgemäße Vorrichtung zur thermischen Analyse in einer Frontansicht.
Fig. 4 zeigt eine erfindungsgemäße Vorrichtung zur thermischen Analyse bei der der Probenwechsler an die Position der Infrarot-Spektrometer/Ofen- Anordnung gefahren wurde.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung zur thermischen Analyse ausgestaltet sein kann und stellen keine abschließende Begrenzung dar.

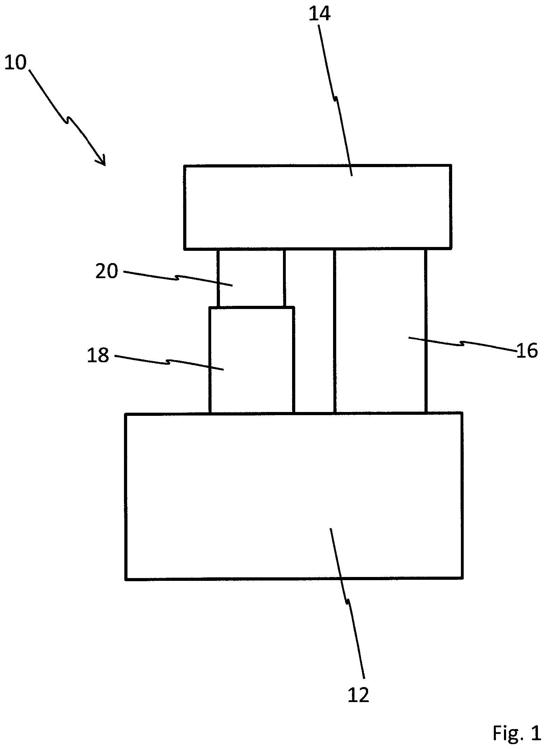

**Fig. 1** zeigt eine erfindungsgemäße Vorrichtung 10 zur thermischen Analyse. Im unteren Bereich der Vorrichtung 10 ist ein thermoanalytisches Messgerät 12 angeordnet. Das thermoanalytische Messgerät 12 ist mit einem Infrarot-Spektrometer 14 über eine Hub-Schwenkeinheit 16 verbunden. Der Ofen 18, zum Aufheizen von Proben, ist über eine Kupplung 20 fest mit dem Infrarot-Spektrometer 14 verbunden.

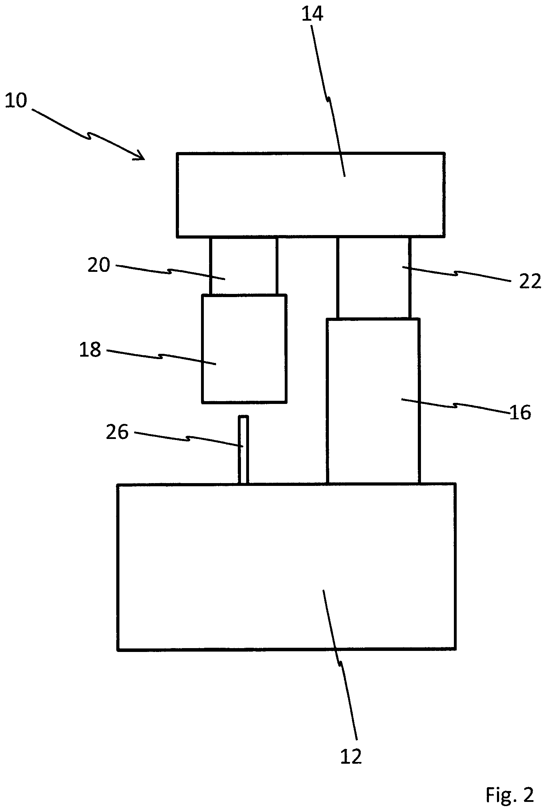

**Fig. 2** zeigt eine erfindungsgemäße Vorrichtung 10 zur thermischen Analyse in geöffnetem Zustand. Das Infrarot-Spektrometer 14 wurde mittels der Hub-Schwenkeinheit 16 angehoben, so dass der Ofen 18 von dem thermoanalytischen Messgerät 12 getrennt ist. Der Ofen 18 und das Infrarot-Spektrometer 14 sind weiterhin über eine Kupplung 20 miteinander verbunden. Das Anheben der Kombination aus Ofen 18 und Infrarot-Spektrometer 14 erfolgt durch eine Hubvorrichtung 22, die sich in der Hub-Schwenkeinheit 16 befindet. Für den Fachmann ist klar, dass es für derartige Hubvorrichtungen 22 viele Gestaltungsformen gibt. So kann die Hubvorrichtung 22 beispielsweise eine hydraulische, mechanische oder elektro-mechanische Hubvorrichtung 22 sein. Durch das Anheben des Ofens 18 wird der Probenhalter 26 freigegeben, so dass neue Proben in die Vorrichtung 10 eingebracht werden können.

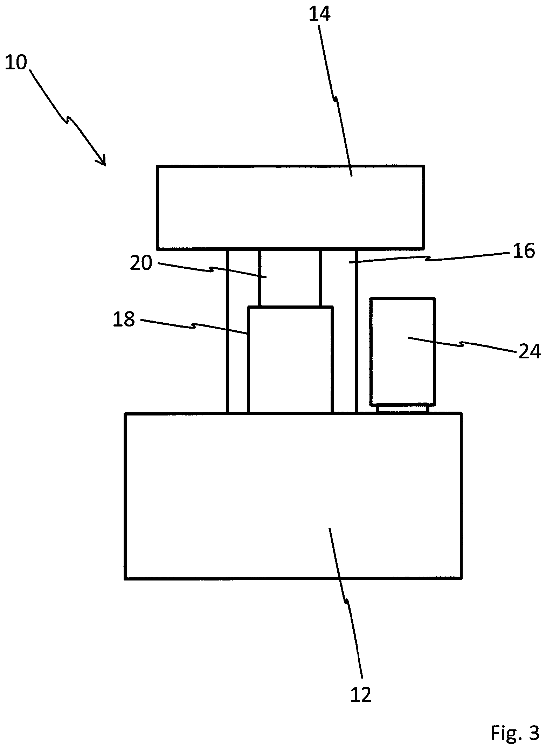

**Fig. 3** zeigt eine erfindungsgemäße Vorrichtung 10 zur thermischen Analyse in einer Frontansicht. Die Vorrichtung 10 zur thermischen Analyse besteht aus einem thermoanalytischen Messgerät 12 und einem Infrarot-Spektrometer 14, wobei diese über eine Hub-Schwenkeinheit 16 miteinander verbunden sind. Vor der Hub-Schwenkeinheit 16 sind der Ofen 18 und die Kupplung 20 dargestellt. Weiterhin ist ein Probenwechsler 24 rechts neben dem Ofen 18 und oberhalb des thermoanalytischen Messgerätes 12 angeordnet.

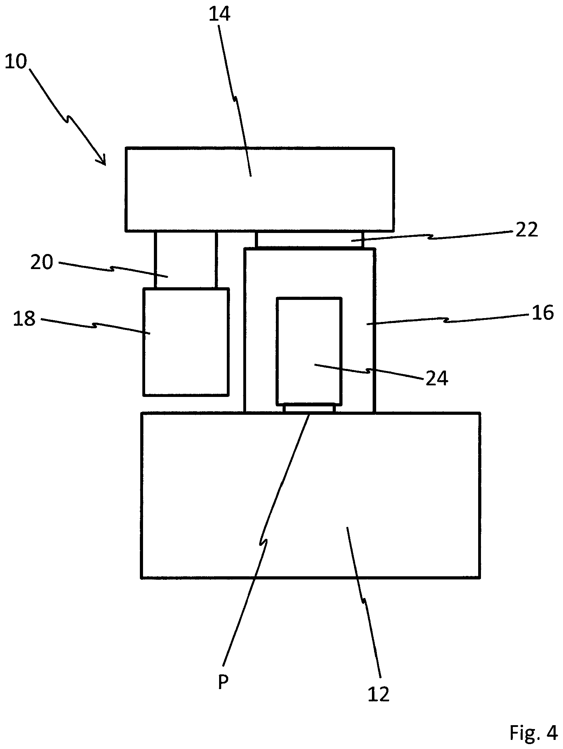

**Fig. 4** zeigt eine erfindungsgemäße Vorrichtung 10 zur thermischen Analyse bei der der Probenwechsler 24 an die Position P der Kombination aus Infrarot-Spektrometer 14 und Ofens 18 gefahren wurde. In Fig. 4 wurde die Kombination aus dem Infrarot-Spektrometer 14, der Kupplung 20 und dem Ofen 18 mittels der Hub-Schwenkeinheit 16 von der Position P des Ofens 18 wegbewegt. An diese Position P ist der Probenwechsler 24 gefahren worden, so dass eine neue Probe auf den Probenträger (nicht dargestellt) aufgebracht werden kann. Das Infrarot-Spektrometer 14, sowie der Ofen 18 und die Kupplung 20 sind durch die Hubvorrichtung 22 vom thermoanalytischen Messgerät 12 beabstandet.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichen

- 10: Vorrichtung zur thermischen Analyse
- 12: thermoanalytisches Messgerät
- 14: Infrarot-Spektrometer
- 16: Hub- Schwenkeinheit
- 18: Ofen
- 20: Kupplung
- 22: Hubvorrichtung
- 24: Probenwechsler
- 26: Probenträger
- P: Position des Ofens auf dem thermoanalytischen Messgerät

## Patentansprüche

1. Vorrichtung zur thermischen Analyse (10) bestehend aus mindestens einem thermoanalytischen Messgerät (12) und mindestens einem Infrarot-Spektrometer (14) wobei das thermoanalytische Messgerät (12) und das mindestens eine Infrarot-Spektrometer (14) über mindestens eine Hub-Schwenkeinheit (16) miteinander verbunden sind und das mindestens eine Infrarot-Spektrometer (14) oberhalb des thermoanalytischen Messgerätes (12) angeordnet ist und bei welcher Vorrichtung zur thermischen Analyse (10) ein Ofen (18) zur Beheizung einer Probe des thermoanalytischen Messgeräts (12) vorgesehen ist, wobei der Ofen (18) und das Infrarot-Spektrometer (14) über eine Kupplung (20) fest miteinander verbunden sind und wobei die Kupplung (20) zwischen dem Ofen (18) und dem Infrarot-Spektrometer (14) angeordnet ist und der Ofen (18) oberhalb des thermoanalytischen Messgeräts (12) und unterhalb des Infrarot-Spektrometers (14) angeordnet ist.

2. Vorrichtung zur thermischen Analyse (10) nach Anspruch 1, wobei die Vorrichtung (10) mit einem Probenwechsler (24) versehen ist und der Probenwechsler (24) durch die Hub-Schwenkeinheit (16) an die Position (P) des Ofens (18) verfahrbar ist.

3. Vorrichtung zur thermischen Analyse (10) nach Anspruch 1 oder Anspruch 2, wobei die Hub-Schwenkeinheit (16) mit mindestens einer Hubvorrichtung (22) versehen ist, welche Hubvorrichtung (22) eine hydraulische, mechanische oder elektro-mechanische Vorrichtung ist.

4. Vorrichtung zur thermischen Analyse (10) nach einem der Ansprüche 1 bis 3, bei welcher über dem thermoanalytischen Messgerät (12) zusätzlich zu dem Infrarot-Spektrometer (14) mindestens ein weiteres Messgerät angeordnet ist, wobei die Messgeräte über die Hub-Schwenkeinheit (16) mit dem thermoanalytischen Messgerät (12) verbunden sind.

5. Vorrichtung zur thermischen Analyse (10) nach einem der Ansprüche 1 bis 4, wobei das thermoanalytische Messgeräte (12) ein Messgerät zur Differentialthermoanalyse oder zur Differenzkalorimetrie, beziehungsweise zur Dynamischen Differenzkalorimetrie oder zur Thermogravimetrie beziehungsweise zur Thermogravimetrischen Analyse oder zur Simultanen Thermischen Analyse oder zur Thermomechanischen Analyse ist.

6. Vorrichtung zur thermischen Analyse (10) nach einem der Ansprüche 1 bis 5 wobei das Infrarot-Spektrometer (14) ein Messgerät zur Fourier-Transformations-Infrarotspektroskopie und/oder zur Nah-Infrarotspektroskopie ist.

7. Vorrichtung zur thermischen Analyse (10) nach einem der Ansprüche 1 bis 6, wobei die Hub-Schwenkeinheit (16) voll- oder teilautomatisiert ist.

8. Vorrichtung zur thermischen Analyse (10) nach einem der Ansprüche 1 bis 7, bei welcher die Kupplung (20) mit dem Ofen (18) und mit dem Infrarot-Spektrometer (14) durch eine Verschraubung verbunden ist.

## Claims

1. A device for thermal analysis (10) consisting of at least one thermoanalytical measurement device (12) and at least one infrared spectrometer (14), wherein the thermoanalytical measurement device (12) and the at least one infrared spectrometer (14) are connected to one another by means of at least one lift-swivel unit (16) and wherein the at least one infrared spectrometer (14) is disposed above the thermoanalytical measurement device (12) and in which device for thermal analysis (10) a furnace (18) for heating a sample of the thermoanalytical measurement device (12) is provided, wherein the furnace (18) and the infrared spectrometer (14) are connected fixedly to one another by means of a coupling (20) and wherein the coupling (20) is disposed between the furnace (18) and the infrared spectrometer (14) and wherein the furnace (18) is located above the thermoanalytical measurement device (12) and below the infrared spectrometer (14).

2. The device for thermal analysis (10) according to claim 1, wherein the device (10) is provided with a sample changer (24) and which sample changer (24) can be moved to the position (P) of the furnace by means of the lift-swivel unit (16).

3. The device for thermal analysis (10) according to claim 1 or claim 2, wherein the lift-swivel unit (16) is provided with at least one lifting device (22), which lifting device (22) is a hydraulic, a mechanical or an electromechanical device.

4. The device for thermal analysis (10) according to one of the claims 1 to 3, in which, in addition to the infrared spectrometer (14), at least one further measurement device is disposed above the thermoanalytical measurement device (12) wherein the measurement devices are connected to the thermoanalytical measurement device (12) by means of the lift-swivel unit (16).

5. The device for thermal analysis (10) according to one of the claims 1 to 4, wherein the thermoanalytical measurement device (12) is a measurement device for differential thermal analysis or differential calorimetry, or, as the case may be, for dynamic differential calorimetry or for thermogravimetry, or, as the case may be, for thermogravimetric analysis or for simultaneous thermal analysis or for thermomechanical analysis.

6. The device for thermal analysis (10) according to one of the claims 1 to 5, wherein the infrared spectrometer (14) is a measurement device for Fourier transform infrared spectroscopy and/or for near-infrared spectroscopy.

7. The device for thermal analysis (10) according to one of the claims 1 to 6, wherein the lift-swivel unit (16) is fully or partially automated.

8. The device for thermal analysis (10) according to one of the claims 1 to 7, in which the coupling (20) is connected to the furnace (18) and to the infrared spectrometer (14) by a screw connection.

## Revendications

1. Dispositif d'analyse thermique (10) constitué d'au moins un appareil de mesure thermoanalytique (12) et d'au moins un spectromètre infrarouge (14), dans lequel ledit appareil de mesure thermoanalytique (12) et ledit au moins un spectromètre infrarouge (14) sont reliés entre eux par au moins une unité de levage et de pivotement (16) et ledit au moins un spectromètre infrarouge (14) est disposé au-dessus de l'appareil de mesure thermoanalytique (12) et dans lequel dispositif d'analyse thermique (10) est prévu un four (18) pour le chauffage d'un échantillon de l'appareil de mesure thermoanalytique (12), dans lequel le four (18) et le spectromètre infrarouge (14) sont solidaires l'un de l'autre par l'intermédiaire d'un accouplement (20) et dans lequel ledit accouplement (20) est agencé entre le four (18) et le spectromètre infrarouge (14) et le four (18) est agencé au-dessus de l'appareil de mesure thermoanalytique (12) et au-dessous du spectromètre infrarouge (14).

2. Dispositif d'analyse thermique (10) selon la revendication 1, dans lequel le dispositif (10) est pourvu d'un changeur d'échantillons (24), et ledit changeur d'échantillons (24) peut être déplacé vers la position (P) du four (18) par ladite unité de levage et de pivotement (16).

3. Dispositif d'analyse thermique (10) selon la revendication 1 ou la revendication 2, dans lequel l'unité de levage et de pivotement (16) est munie d'au moins un dispositif de levage (22), lequel dispositif de levage (22) est un dispositif hydraulique, mécanique ou électromécanique.

4. Dispositif d'analyse thermique (10) selon l'une quelconque des revendications 1 à 3, dans lequel, en plus du spectromètre infrarouge (14), au moins un autre appareil de mesure est disposé au-dessus de l'appareil de mesure thermoanalytique (12), dans lequel les appareils de mesure sont reliés par l'unité de levage et de pivotement (16) à l'appareil de mesure thermoanalytique (12).

5. Dispositif d'analyse thermique (10) selon l'une quelconque des revendications 1 à 4, dans lequel ledit appareil de mesure thermoanalytique (12) est un appareil de mesure pour l'analyse thermique différentielle ou pour la calorimétrie différentielle, ou bien pour la calorimétrie différentielle dynamique ou pour la thermogravimétrie ou bien pour l'analyse thermogravimétrique ou pour l'analyse thermique simultanée ou pour l'analyse thermo-mécanique.

6. Dispositif d'analyse thermique (10) selon l'une quelconque des revendications 1 à 5, dans lequel le spectromètre infrarouge (14) est un appareil de mesure pour la spectroscopie infrarouge à transformée de Fourier et/ou pour la spectroscopie proche infrarouge.

7. Dispositif d'analyse thermique (10) selon l'une quelconque des revendications 1 à 6, dans lequel l'unité de levage et de pivotement (16) est totalement ou partiellement automatisée.

8. Dispositif d'analyse thermique (10) selon l'une quelconque des revendications 1 à 7, dans lequel l'accouplement (20) est relié par une liaison vissée au four (18) et au spectromètre infrarouge (14).
